Europäisches Patentamt

European Patent Office

Office européen des brevets

(19)

(11)     **EP 0 942 293 B1**

(12)     **FASCICULE DE BREVET EUROPEEN**

(45) Date de publication et mention
de la délivrance du brevet:
**29.05.2002   Bulletin 2002/22**

(51) Int Cl.7: **G01S 17/46**, G01S 7/481

(21) Numéro de dépôt: **98811242.1**

(22) Date de dépôt: **17.12.1998**

(54) **Dispositif de mesure de distances ou de l'angle d'incidence d'un faisceau lumineux**

Vorrichtung zur Messung von Abstand oder Einfallswinkel eines Lichtstrahls

System for measuring range or angle of incidence of a light beam

(84) Etats contractants désignés:
**AT BE CH DE ES FR GB IT LI NL SE**

(30) Priorité: **10.02.1998   EP 98810102**

(43) Date de publication de la demande:
**15.09.1999   Bulletin 1999/37**

(73) Titulaire: **Optosys SA**
**1762 Givisiez (CH)**

(72) Inventeurs:
• **Rhême, Charles**
**1725 Posieux (CH)**

• **Heimlicher, Peter**
**CH-1700 Freiburg (CH)**

(74) Mandataire:
**AMMANN PATENTANWAELTE AG BERN**
**Schwarztorstrasse 31**
**3001 Bern (CH)**

(56) Documents cités:
**EP-A- 0 458 752         US-A- 4 872 747**

**Description**

La présente invention porte sur un dispositif de mesure de distances ou d'un angle d'incidence d'un faisceau lumineux selon le préambule de la revendication 1.

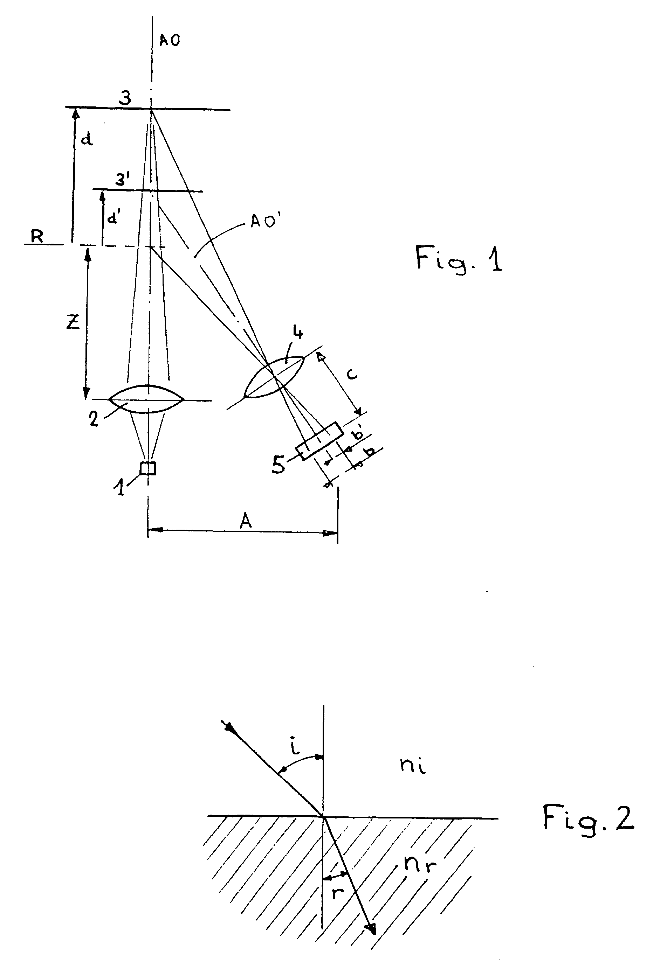

En général, les mesures d'angle d'incidence ou de distance par des systèmes optoélectroniques sont basées sur le principe de triangulation décrit dans la figure 1. Pour l'obtention d'une bonne précision, il est nécessaire, avec cette méthode, d'avoir une base importante, ce qui constitue un premier inconvénient, auquel s'ajoute un second inconvénient, à savoir la forte limitation de la plage de mesure entraînant une zone morte Z importante. Ces inconvénients sont particulièrement gênants dans le cas d'un capteur. Celui-ci doit contenir la source de lumière et le récepteur dans un même boîtier, dont l'encombrement doit être le plus restreint possible.

Le brevet US-A-4 872 747 décrit l'utilisation de prismes pour obtenir un agrandissement anamorphique, comprenant un prisme pour contrôler la grandeur de l'image produite.

EP-A-458 752 du même déposant décrit un procédé de mesure d'un angle d'incidence comprenant une lame biréfringente d'épaisseur variable en forme de prisme pour faire apparaître, en lumière polarisée uniquement, une succession de franges d'interférence dont la position est déterminée par l'angle du faisceau et l'épaisseur de la lame.

Partant de cet état de la technique, l'invention a pour but la réalisation d'un dispositif de mesure de distances ou d'un angle d'incidence d'un faisceau lumineux, ayant une base restreinte, c'est-à-dire un encombrement réduit par rapport aux dispositifs connus et une plage de mesure plus importante.

Ce but est atteint grâce aux moyens définis dans l'un ou l'autre des revendications indépendantes 1 et 2.

L'invention sera expliquée en détail en se référant aux dessins ci-annexés, présentant à titre d'exemple des formes d'exécution de l'objet de l'invention.

La figure 1    montre schématiquement le principe de mesure de triangulation,

la figure 2    décrit la loi de Snell-Descartes,

la figure 3    montre le principe de mesure selon l'invention,

la figure 4    montre une première forme d'exécution d'un dispositif selon l'invention,

la figure 5    montre une deuxième forme d'exécution de l'invention,

la figure 6    montre un principe de mesure plus ample par rapport à celui de la figure 3, et

la figure 7    montre une autre forme d'exécution d'un dispositif selon l'invention.

Dans la figure 1, qui représente schématiquement le principe d'une mesure de distance par triangulation connu, l'on reconnaît la source lumineuse 1 et l'optique d'émission qui projette le faisceau émanant de la source lumineuse sur l'objet à mesurer 3 et 3' qui se trouve à une distance d, respectivement d' d'une surface de référence. La lumière réfléchie diffusément par l'objet à mesurer est collectée dans une lentille de réception ou une optique de réception 4 et projetée sur un détecteur de position 5 se trouvant à une distance C de ladite lentille ou optique de réception 4. Dans cet arrangement schématique la distance b de la référence R du détecteur de position est fonction de la distance à mesurer d.

Pour obtenir une bonne précision, il est nécessaire d'avoir une base A importante entre l'axe optique AO de l'optique d'émission et l'axe optique AO' de l'optique de réception. De plus, comme cela ressort nettement de la figure 1, la plage de mesure est alors limitée par l'arrangement optique et la dimension du détecteur de position. On constate également la zone morte Z importante.

L'idée fondamentale de la présente invention consiste à comprimer ou amplifier non linéairement la variation angulaire de la lumière dans l'optique de réception. La réalisation de cette idée inventive permet de disposer d'un détecteur compact ayant une grande plage de mesure tout en rapprochant l'optique de réception et l'optique d'émission.

La propagation de la lumière dépend de l'indice de réfraction du milieu qu'elle traverse, ce qui peut être exprimé par la loi de Snell-Descartes (voir figure 2)

$$\frac{\sin i}{\sin r} = \frac{n_r}{n_i},$$

où i est l'angle d'incidence et r l'angle de réfraction, et où $n_i$ est l'indice de réfraction pour l'air et $n_r$ l'indice de réfraction pour le milieu à traverser. En analysant le cas d'un rayonnement se propageant dans l'air et qui pénètre dans du verre (n = 1.5), on constate que le rapport $\frac{\Delta r}{\Delta i}$ varie de 0,66 à 0, lorsque i varie de 0 à 90°. $\Delta r$ signifie la variation de l'angle de réfraction et $\Delta i$ la variation de l'angle d'incidence.

Si l'on considère la propagation du rayon lumineux qui passe d'un milieu plus réfringent à un milieu moins réfringent, on constate alors une expansion des variations angulaires, valable jusqu'à la réflexion totale selon la loi de Snell-Descartes.

Pour ne pas détruire l'effet de compression ou d'amplification, il faut veiller à ce que les faces d'entrée et de sortie ne soient pas parallèles. Ceci est habituellement réalisé en utilisant un prisme, mais il est aussi possible de recourir à un matériel optique dont l'indice de réfraction varie sur le chemin du faisceau lumineux. On bénéficiera ainsi d'une compression ou d'une amplification des variations angulaires même avec une lame dont les faces d'entrée et de sortie sont parallèles.

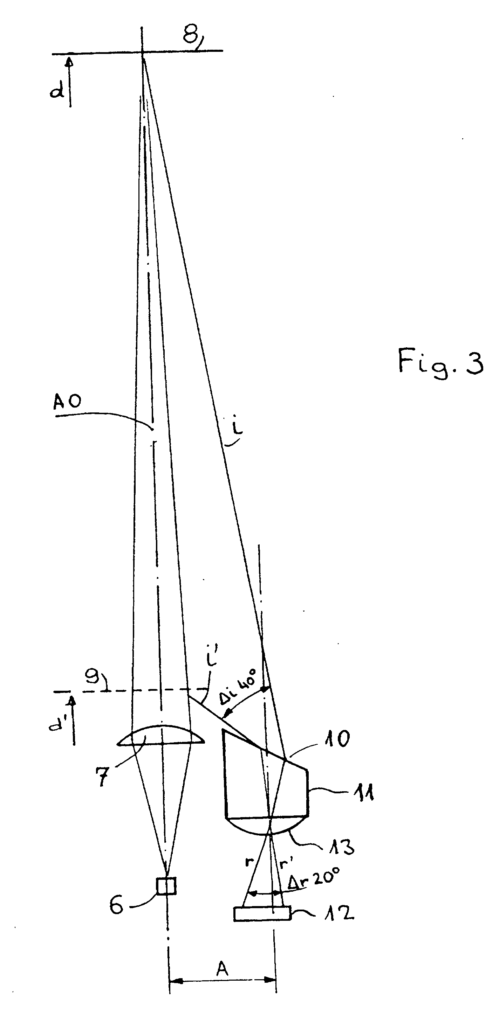

On se réfère maintenant au cas d'un capteur (voir figure 3), qui est une partie d'un dispositif de mesure comprenant en outre des circuits électriques et électroniques et d'autres composants. Si l'on désire faire des mesures à l'aide d'un faisceau lumineux dont l'angle d'incidence, c'est-à-dire l'angle de la lumière réfléchie, varie de $\Delta i = 40°$, on peut, selon l'invention comprimer cette variation à environ 20° à l'aide d'un prisme approprié. On aura ainsi augmenté considérablement la plage de mesure du capteur. La détermination des angles formés par les faces du prisme 11 produit une compression angulaire optimale sur la face d'entrée dudit prisme et évite que la compression soit trop affaiblie sur la face de sortie. Le faisceau sortant est ensuite focalisé sur le détecteur de position par une lentille qui pourra aussi être intégrée à la face de sortie du prisme. La figure 3 montre très schématiquement la source de lumière 6, l'optique d'émission 7 avec l'axe optique AO et l'objet à mesurer 8 à une certaine distance d de la source et l'objet 9 représenté en pointillé à une distance réduite d' qui correspond à une zone morte réduite.

La figure 3 montre une variation entre le faisceau incident i venant de l'objet 8 situé à la plus grande distance d et le faisceau d'incidence i' venant de l'objet 9 situé à la distance plus courte d', c'est-à-dire un $\Delta i$ de 40° tombant sur la face d'entrée 10 du prisme 11, qui produit une variation du faisceau $\Delta r$ de 20° à la sortie du prisme. Cela veut dire que la plage de mesure du détecteur 12 est grande et la zone morte petite malgré un faible écart entre la source lumineuse et le détecteur de position. La figure 3 montre aussi que la lentille 13 qui focalise le faisceau sortant du prisme sur le détecteur de position peut être intégrée au prisme.

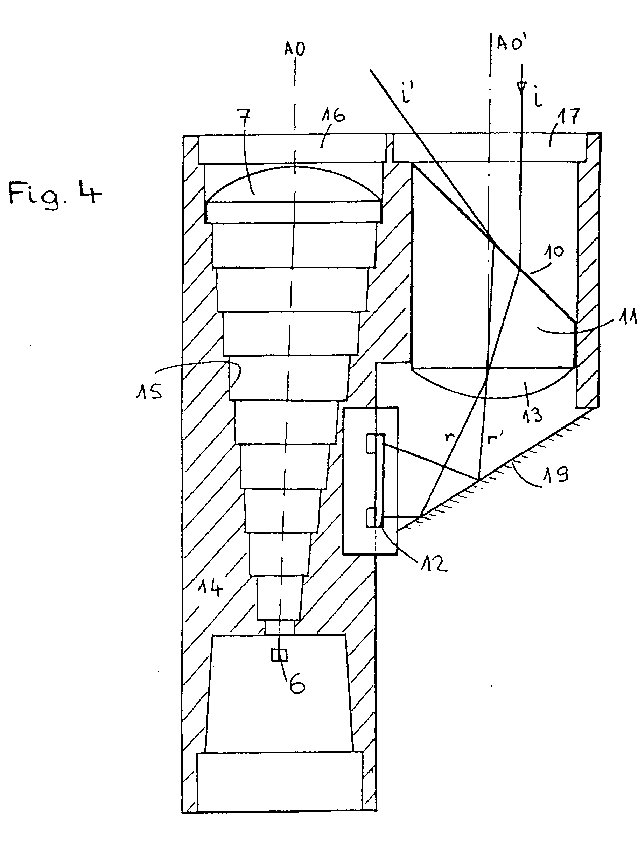

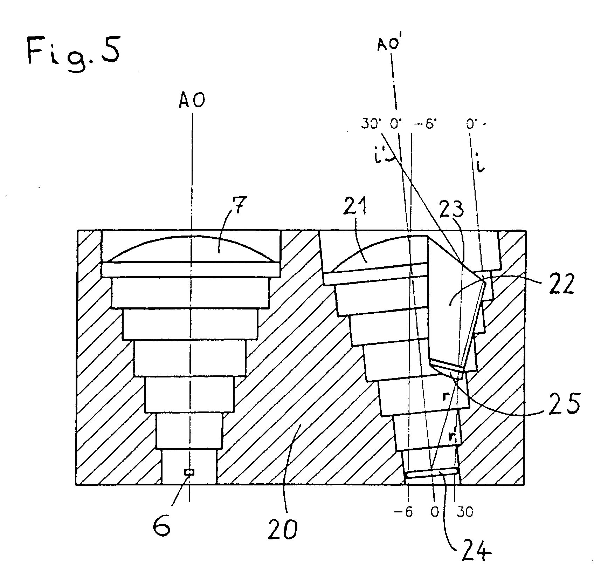

Les figures 4 et 5 montrent deux exemples de réalisation d'un capteur, c'est-à-dire d'un ensemble optoélectronique avec une source lumineuse et un détecteur de position. La figure 4 est un dessin schématique montrant à gauche un système émetteur et à droite un système récepteur, avec la source lumineuse 6 dans un boîtier 14 comprenant des moyens connus (non-représentés) pour tenir et ajuster la source lumineuse et comprenant des paliers 15 noircis à l'intérieur pour générer le moins de réflexion possible. Vers la sortie du boîtier l'on reconnaît le système optique 7 projetant la lumière de la source lumineuse 6 sur l'objet à mesurer, qui n'est pas représenté. L'axe optique AO est dessiné en trait discontinu. Vers l'extérieur le boîtier est fermé par une fenêtre optique 16.

Le système récepteur est intégré dans le même boîtier, qui est fermé vers l'extérieur par une fenêtre optique 17. Le faisceau incident i' provenant de l'objet à mesurer le plus rapproché est environ à 40° par rapport à l'axe optique AO et tombe sur la face d'entrée 10 du prisme 11. Cette face d'entrée 10 est taillée à environ 45° par rapport à l'axe optique AO'. Le faisceau réfracté r' du faisceau incident i' traverse ensuite la lentille 13 intégrée à la face de sortie du prisme et ayant par exemple une distance focale f = 6. Le faisceau réfracté sortant tombe ensuite sur un miroir 19 renvoyant le faisceau sur le détecteur de position 12. Le faisceau incident i venant de la position de l'objet à mesurer la plus éloignée est réfracté par la face d'entrée 10 du prisme et devient le faisceau réfracté r traversant aussi la lentille 13 et tombant sur le miroir 19, d'où il est renvoyé sur le détecteur de position 12.

Le dispositif de mesure se trouve dans un boîtier et comprend le détecteur de position ainsi que les circuits de mesure et de commande connus de l'homme du métier. La construction selon la figure 4 permet de réaliser un capteur à dimension réduite par rapport à un capteur selon l'art antérieur.

L'exemple de fabrication selon la figure 5 permet d'augmenter encore la distance de détection et d'obtenir une grande plage de mesure avec une construction compacte et des dimensions réduites. Le système émetteur et le système récepteur se trouvent placés côte-à-côte dans un même boîtier 20. Le système émetteur comprend une source lumineuse 6 et une lentille de focalisation 7 projetant la lumière sur l'objet à mesurer non représenté. Le système de réception est constitué par l'association d'un prisme avec lentille de focalisation, comme décrit dans l'exemple précédent, et d'une lentille ou portion de lentille focalisant la lumière réfléchie sur un même détecteur de position.

Lorsque la lumière réfléchie tombe sous un angle compris entre -6° et 0° par rapport à l'axe optique, la lentille 21 focalise ces faisceaux sur le détecteur de position 24 entre les points -6 et 0.

Si l'angle d'incidence varie entre 0° et 30°, les faisceaux i et i' incidents sont réfractés par la face 23 d'entrée du prisme 22 et ensuite focalisés par la lentille 25 sur le détecteur de position 24 se trouvant à angle droit par rapport à l'axe optique. Les rayons réfractés r et r' sont focalisés sur le détecteur entre le point O se trouvant exactement dans l'axe optique du système et le point 30 vers l'extrémité du détecteur.

La compression angulaire non linéaire produite par le prisme abaisse la sensibilité angulaire de la mesure lorsque la distance à mesurer diminue. La quantité de lumière collectée par le prisme diminue également lorsque la distance de mesure diminue car une plus grande partie est alors réfléchie vers l'extérieur par la face d'entrée du prisme. Ceci est également un paramètre favorable qui tend à éviter la saturation du dispositif de mesure.

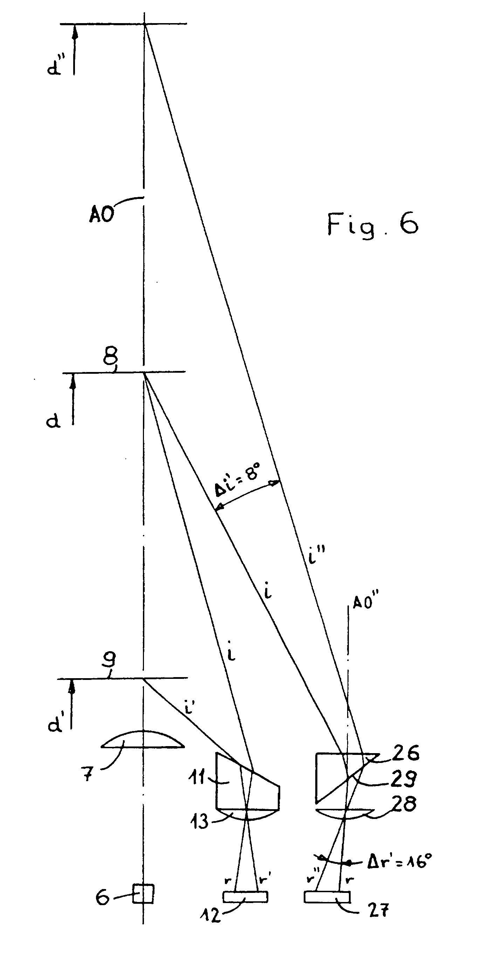

Avec l'arrangement optique décrit par la figure 6, on cherche à augmenter encore la distance de détection en utilisant le prisme 26 pour effectuer non pas une compression mais une expansion angulaire de façon à augmenter la sensibilité de mesure sur le détecteur de position 27. Pour la mesure dans le domaine proche, on utilisera l'information du détecteur de position 12 qui donnera une mesure comprimée de la variation angulaire du faisceau incident i' à i. La mesure dans un domaine éloigné sera effectuée par le détecteur de position 27 qui, au travers du prisme 26 et de la lentille 28, sera sensible à une valeur expansée de la variation angulaire $\Delta i' = i$ à i".

Le schéma de la figure 6 comprend celui de la figure 3 et en plus l'arrangement pour l'expansion du faisceau. Le prisme 26 est situé de telle manière que la face inclinée par rapport à l'axe optique AO", qui est parallèle à l'axe optique AO de l'optique de réception, est la face de sortie 29. La face de sortie 29 peut former un angle d'environ 40° avec l'axe optique AO". La figure 6 montre une variation entre le faisceau incident i venant de l'objet 8 situé à la distance moyenne d et le faisceau d'incidence i" venant de l'objet situé à la plus grande distance d" avec un $\Delta i$ de 8° tombant sur le prisme 26 pour produire une variation du faisceau $\Delta r$ de 16° sur le détecteur 27, à la sortie du prisme.

Selon les besoins, l'arrangement de la figure 6 permet de réaliser des détecteurs mesurant à grande distance avec une grande plage de mesure, en combinant une optique à expansion angulaire ou une optique classique pour la grande distance et une optique à compression angulaire pour la zone rapprochée.

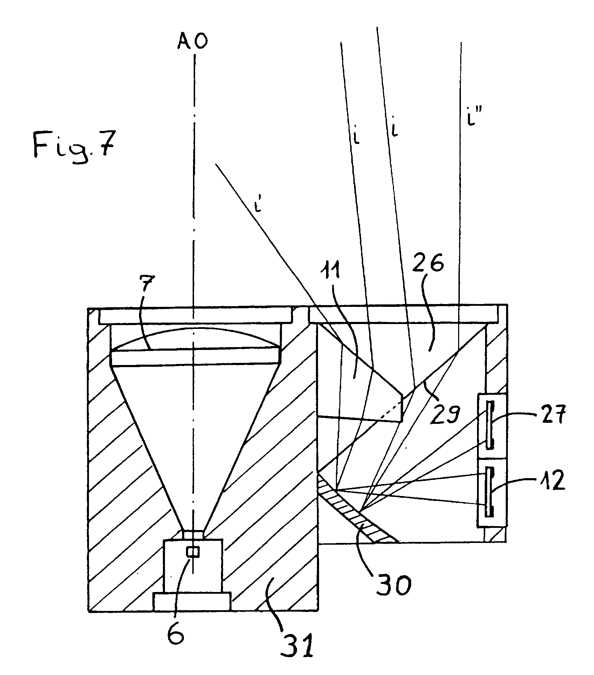

L'exemple de fabrication décrit par la figure 7 montre la réalisation d'un capteur réunissant les avantages de la compression angulaire par le prisme 11 pour les mesures rapprochées et de l'expansion angulaire par le prisme 26 pour les mesures éloignées. Le système émetteur et les systèmes récepteurs avec les deux prismes sont intégrés côte-à-côte dans un même boitier 31 et la construction est rendue très compacte par l'utilisation d'un même miroir sphérique 30 pour remplacer la lentille 13 ou 25 et la lentille 28, focalisant les faisceaux incidents sur les détecteurs de position 12 ou 24 pour les mesures proches et 27 pour les mesures éloignées. Il est possible de remplacer le seul miroir sphérique par deux miroirs sphérique, un pour chaque prisme. Il est concevable de prévoir un seul détecteur au lieu des deux détecteurs 12 ou 24 et 27.

Si dans les figures 6 et 7 les deux processus, compression et expansion des variations angulaires, ont été décrits et démontrés ensemble, il est bien possible de n'utiliser qu'un seul des deux processus.

## Revendications

1. Dispositif de mesure de distances ou de l'angle d'incidence d'un faisceau lumineux, comprenant une optique d'émission (7) pour projeter le faisceau lumineux sur l'objet à mesurer et une optique de réception (11, 13; 21, 22, 25) pour projeter la lumière réfléchie sur un détecteur de position, **caractérisé en ce que** l'optique de réception (11, 13; 21, 22, 25; 30) comprend un prisme (11, 22) réfractant le faisceau lumineux avec une compression des variations angulaires permettant de réduire l'étendue du détecteur de position (12, 24) nécessaire pour mesurer une plage de mesure correspondante.

2. Dispositif de mesure de distances ou de l'angle d'incidence d'un faisceau lumineux comprenant une optique d'émission (7) pour projeter le faisceau lumineux sur l'objet à mesurer et une optique de réception (26, 28, 29; 30) pour projeter la lumière réfléchie sur un détecteur de position, **caractérisé en ce que** l'optique de réception comprend comme premier. élément un prisme (26) réfractant le faisceau lumineux avec une expansion des variations angulaires permettant d'augmenter la sensibilité du détecteur de position (27) pour les faibles variations angulaires.

3. Dispositif selon la revendication 1, **caractérisé en ce que** la face d'entrée (10, 23) du prisme (11, 22) forme un angle d'environ 45° avec l'axe optique (AO') de l'optique de réception.

4. Dispositif selon la revendication 2, **caractérisé en ce que** la face de sortie (29) du prisme (26) forme un angle d'environ 40° avec l'axe optique (AO) de l'optique de réception.

5. Dispositif selon l'une des revendications 1 à 4, **caractérisé en ce que** la face de sortie du prisme comprend des éléments optique (13, 25; 28; 30) pour projeter le faisceau réfracté sur le détecteur de position (12, 24, 27).

6. Dispositif selon la revendication 5, **caractérisé en ce que** les éléments optiques à la face de sortie du premier prisme (11) et à la face de sortie (29) du deuxième prisme (26) sont constitués par un seul miroir sphérique (30) ou par deux miroirs sphérique focalisant les faisceaux diffractés sur le(s) détecteur(s) de position (12, 24, 27).

7. Dispositif selon l'une des revendications 1, 3, 5 ou 6, **caractérisé en ce que** l'optique de réception, comprenant le prisme (11), est séparé de l'optique d'émission et comprend un miroir (19) agencé sous la face de sortie du prisme avec les éléments optique (13) pour projeter le faisceau réfracté sur le détecteur de position (12) agencé parallèlement à l'axe optique (AO'), l'optique d'émission et l'optique de réception formant un capteur agencé dans un boîtier (14).

8. Dispositif selon l'une des revendications 1, 3, 5 ou 6, **caractérisé en ce que** l'optique de réception (21; 22, 25) comprend l'association du prisme (22) avec une lentille de focalisation (25) et d'une lentille ou portion de lentille (21) de focalisation, chacun de ces éléments étant conçu pour recevoir la lumière réfléchie et pour projeter cette lumière réfléchie sur le détecteur de position (24) selon l'angle formé par le faisceau avec l'axe optique (AO') du système optique de réception.

**9.** Dispositif selon la revendication 8, **caractérisé en ce que** le détecteur de position (24) est orienté à 90° par rapport à l'axe optique (AO') de l'optique de réception.

**10.** Dispositif selon l'une des revendications 1 à 9, **caractérisé par** un assemblage regroupant l'optique d'émission (7) avec l'optique de réception (11, 13, 21, 22, 25, 30) réfractant le faisceau lumineux avec une compression et l'optique de réception (26, 28, 29, 30) réfractant le faisceau lumineux avec une expansion des variations angulaires ainsi que le(s) détecteur(s) de position (12, 24; 27) dans un boîtier (31).

## Claims

**1.** Device for the measurement of distances or of the angle of incidence of a light beam, comprising an optical emitting system (7) for projecting the light beam onto the object to be measured, and an optical receiving system (11, 13; 21, 22, 25) for projecting the reflected light onto a position detector, **characterised in that** the optical receiving system (11, 13; 21, 22, 25; 30) comprises a prism (11, 22) which refracts the light beam with a compression of the angular variations thereof, thus allowing to reduce the area of the position detector (12, 24) required in order to measure a corresponding measuring range.

**2.** Device for the measurement of distances or of the angle of incidence of a light beam, comprising an optical emitting system (7) for projecting the light beam onto the object to be measured, and an optical receiving system (26, 28, 29; 30) for projecting the reflected light onto a position detector, **characterised in that** the optical receiving system comprises a first element in the form a prism (26) which refracts the light beam with an expansion of the angular variations thereof, thus allowing to increase the sensitivity of the position detector (27) for small angular variations.

**3.** Device according to claim 1, **characterised in that** the entrance surface (10, 23) of the prism (11, 22) forms an angle of approximately 45° with the optical axis (AO') of the optical receiving system.

**4.** Device according to claim 2, **characterised in that** the exit surface (29) of the prism (26) forms an angle of approximately 40° with the optical axis (AO) of the optical receiving system.

**5.** Device according to any one of claims 1 to 4, **characterised in that** the exit surface of the prism comprises optical elements (13, 25; 28; 30) for projecting the refracted beam onto the position detector (12, 24, 27).

**6.** Device according to claim 5, **characterised in that** the optical elements at the exit surface of the first prism (11) and at the exit surface (29) of the second prism (26) are comprised of a single spherical mirror (30) or of two spherical mirrors which focus the diffracted beams onto the position detector(s) (12, 24, 27).

**7.** Device according to any one of claims 1, 3, 5, or 6, **characterised in that** the optical receiving system, comprising the prism (11), is separated from the optical emitting system and comprises a mirror (19) which is arranged under the exit surface of the prism with the optical elements (13) in order to project the refracted beam onto the position detector (12) which is arranged in parallel to the optical axis (AO'), the optical emitting and receiving systems forming a sensor which is arranged in a housing (14).

**8.** Device according to any one of claims 1, 3, 5, or 6, **characterised in that** the optical receiving system (21; 22, 25) comprises a combination of the prism (22) with a focusing lens (25) and of a focusing lens or lens portion (21), each of these elements being designed for receiving the reflected light and projecting the reflected light onto the position detector (24), depending on the angle formed between the beam and the optical axis (AO') of the optical receiving system.

**9.** Device according to claim 8, **characterised in that** the position detector (24) is disposed at 90° with respect to the optical axis (AO') of the optical receiving system.

**10.** Device according to any one of claims 1 to 9, **characterised by** an assembly which combines the optical emitting system (7) and the optical receiving system (11, 13, 21, 22, 25, 30) which refracts the light beam with a compression, and the optical receiving system (26, 28, 29, 30) which refracts the light beam with an expansion of the angular variations, as well as the position detector(s) (12, 24; 27) in one housing (31).

## Patentansprüche

**1.** Vorrichtung zur Messung von Entfernungen oder des Einfallswinkels eines Lichtstrahls, mit einer Sendeoptik (7) zum Projizieren des Lichtstrahls auf das zu messende Objekt und einer Empfangsoptik (11, 13; 21, 22, 25) zum Projizieren des reflektierten Lichts auf einen Positionsdetektor, **dadurch gekennzeichnet, dass** die Empfangsoptik (11, 13; 21, 22, 25; 30) ein Prisma (11, 22) aufweist, welches den Lichtstrahl mit einer Kompression der winkelmässigen Variationen bricht, welche eine Verkleinerung des zur Messung eines entsprechenden Messbereichs notwendigen Bereichs des Positionsdetektors (12, 24) gestattet.

2. Vorrichtung zur Messung von Entfernungen oder des Einfallswinkels eines Lichtstrahls, mit einer Sendeoptik (7) zum Projizieren des Lichtstrahls auf das zu messende Objekt und einer Empfangsoptik (26, 28, 29; 30) zum Projizieren des reflektierten Lichts auf einen Positionsdetektor, **dadurch gekennzeichnet, dass** die Empfangsoptik als erstes Element ein Prisma (26) aufweist, welches den Lichtstrahl mit einer Expansion der winkelmässigen Variationen bricht, welche eine Erhöhung der Empfindlichkeit des Positionsdetektors (27) bei kleinen winkelmässigen Variationen gestattet.

3. Vorrichtung nach Anspruch 1, **dadurch gekennzeichnet, dass** die Eintrittsfläche (10, 23) des Prismas (11, 22) einen Winkel von ungefähr 45° zur optischen Achse (AO') der Empfangsoptik bildet.

4. Vorrichtung nach Anspruch 2, **dadurch gekennzeichnet, dass** die Austrittsfläche (29) des Prismas (26) einen Winkel von ungefähr 40° zur optischen Achse (AO) der Empfangsoptik bildet.

5. Vorrichtung nach einem der Ansprüche 1 bis 4, **dadurch gekennzeichnet, dass** die Austrittsfläche des Prismas optische Elemente (13, 25; 28; 30) aufweist, um den gebrochenen Lichtstrahl auf den Positionsdetektor (12, 24, 27) zu projizieren.

6. Vorrichtung nach Anspruch 5, **dadurch gekennzeichnet, dass** die optischen Elemente an der Austrittsfläche des ersten Prismas (11) und an der Austrittsfläche (29) des zweiten Prismas (26) aus einem einzigen sphärischen Spiegel (30) oder aus zwei sphärischen Spiegeln bestehen, welche die gebrochenen Strahlen auf den bzw. die Positionsdetektor(en) (12, 24, 27) fokussieren.

7. Vorrichtung nach einem der Ansprüche 1, 3, 5 oder 6, **dadurch gekennzeichnet, dass** die Empfangsoptik mit dem Prisma (11) von der Sendeoptik getrennt ist und einen unter der Austrittsfläche des Prismas mit den optischen Elementen (13) angeordneten Spiegel (19) aufweist, um den gebrochenen Lichtstrahl auf den parallel zur optischen Achse (AO') angeordneten Positionsdetektor (12) zu projizieren, wobei die Sendeoptik und die Empfangsoptik einen in einem Gehäuse (14) untergebrachten Sensor bilden.

8. Vorrichtung nach einem der Ansprüche 1, 3, 5 oder 6, **dadurch gekennzeichnet, dass** die Empfangsoptik (21; 22, 25) ein Prisma (22) mit einer Sammellinse (25) in Verbindung mit einer Sammellinse oder einem Sammellinsenteil (21) aufweist, wobei jedes dieser Elemente dazu vorgesehen ist, das reflektierte Licht zu empfangen und es je nach dem Winkel zwischen dem Strahl und der optischen Achse (AO') der Empfangsoptik auf den Positionsdetektor (24) zu projizieren.

9. Vorrichtung nach Anspruch 8, **dadurch gekennzeichnet, dass** der Positionsdetektor (24) in einem Winkel von 90° zur optischen Achse (AO') der Empfangsoptik angeordnet ist.

10. Vorrichtung nach einem der Ansprüche 1 bis 9, **gekennzeichnet durch** eine Anordnung bestehend aus der Sendeoptik (7) und einer Empfangsoptik (11, 13, 21, 22, 25, 30), welche den Lichtstrahl mit einer Kompression bricht, sowie einer Empfangsoptik (26, 28, 29, 30), welche den Lichtstrahl mit einer Expansion der winkelmässigen Variationen bricht, und dem oder den Positionsdetektor(en) (12, 24; 27) in einem Gehäuse (31).

AO

3

d

3'

d'

AO'

R

Z

4

c

2

b'

b

5

1

A

Fig. 1

i

ni

nr

r

Fig. 2

Fig. 3

Fig. 4

Fig.5

AO'

AO

30° 0° −6° 0° ·

i' i

7 21 23

22

25

6 −6 0 30

20 24

Fig. 6

Fig.7